# EUROPÄISCHE PATENTSCHRIFT

(11) **EP 3 849 828 B1**
(45) Veröffentlichungstag und Bekanntmachung des Hinweises auf die Patenterteilung: **08.11.2023**
(21) Anmeldenummer: 19765167.2
(22) Anmeldetag: 31.07.2019
(51) Int. Cl.: B60G 3/14, B60G 7/00, B60K 7/00, B60K 11/00, B60T 1/06, F16D 55/00

(54) **RADAUFHÄNGUNG UND SCHWINGE FÜR EIN ÜBER EINEN ELEKTRISCHEN ODER PNEUMATISCHEN MOTOR ANGETRIEBENES RAD**
WHEEL SUSPENSION AND SWING ARM FOR A WHEEL DRIVEN BY AN ELECTRICAL OR PNEUMATIC MOTOR
SUSPENSION DE ROUE ET BRAS OSCILLANT DESTINÉS À UNE ROUE ENTRAÎNÉE PAR UN MOTEUR ÉLECTRIQUE OU PNEUMATIQUE

(30) Priorität: 12.09.2018 DE 102018215530; 10.10.2018 DE 102018217345
(43) Veröffentlichungstag der Anmeldung: 21.07.2021
(73) Patentinhaber: Ziehl-Abegg Automotive GmbH & Co. KG, 74635 Kupferzell (DE)
(72) Erfinder: BIFANO, Natale Cosmo, 74613 Öhringen (DE); SIAMENAU, Dzmitry, 74523 Schwäbisch Hall (DE)
(74) Vertreter: Ullrich & Naumann PartG mbB
(86) Internationale Anmeldenummer: PCT/DE2019/200092
(87) Internationale Veröffentlichungsnummer: WO 2020/052716

(56) Entgegenhaltungen:
- WO-A1-2015/087659
- DE-A1-102011 005 617
- DE-U1-202017 001 665
- US-A1- 2003 230 443
- US-A1- 2008 053 725
- US-A1- 2010 163 323
- US-A1- 2012 000 724
- "Schräglenkerachse", Wikipedia , 24. September 2017 (2017-09-24), XP002795962, Gefunden im Internet: URL:https://de.wikipedia.org/w/index.php?t itle=Schr%C3%A4glenkerachse&oldid=16937761 0 [gefunden am 2019-11-10]

## Beschreibung

Die Erfindung betrifft eine Radaufhängung, nach dem Oberbegriff des Anspruchs 1, und eine Schwinge, nach dem Oberbegriff des Anspruchs 12, für ein über einen elektrischen oder pneumatischen Motor angetriebenes Rad eines Fahrzeugs, insbesondere Hinterrad eines Nutzfahrzeugs. Beispiele für eine solche Radaufhängung und eine solche Schwinge sind aus US 2003/230443 A1, DE 10 2011 005617 A1 und DE 20 2017 001665 U1 bekannt.

Radaufhängungen der in Rede stehenden Art sind seit Jahren aus der Praxis bekannt. Insbesondere für Hinterachsen sind 1-Lenker-Aufhängungen verbreitet, beispielsweise Längslenker- oder Schräglenkeraufhängungen. Bei diesen Aufhängungen ist das Rad über lediglich einen sogenannten Lenker - die Schwinge - schwenkbar am Fahrzeug gelagert. Bei diesen 1-Lenker-Aufhängern können im Betrieb auftretende Längs- und Querkräfte am günstigsten aufgefangen werden, wenn die Schwinge schräg angeordnet ist (Schräglenkeraufhängung) und aufbauseitig zwei Lagerstellen mit großem Abstand zueinander aufweist. Dabei kann eine Schwenkachse der Schwinge in einer horizontalen Ebene schräg zu einer Fahrzeugquerachse verlaufen (Pfeilungswinkel) und in einer horizontalen Ebene schräg zu der Fahrzeugquerachse verlaufen (Dachwinkel). Durch Manipulation des Pfeilungswinkels und/oder des Dachwinkels lässt sich beispielsweise das Wankzentrum, die Spurweitenänderung, die Bremsnickabstützung und die Sturzänderung gezielt manipulieren.

Begrenzt wird diese Manipulierbarkeit dadurch, dass die linken und rechten Räder einer Achse bei Radaufhängungen nach dem Stand der Technik durch den Antriebsstrang - regelmäßig über ein Differentialgetriebe - miteinander gekoppelt sind. Durch Wechselwirkungen zwischen den Rädern lässt sich das Fahrzeugverhalten nur begrenzt beherrschen.

Die bekannten 1-Lenker-Aufhängungen und insbesondere Schräglenkeraufhängungen sind in der Regel mit komplexen Lagerungen für Elemente des Antriebsstrangs versehen, insbesondere um ein Drehmoment von einem Motor des Fahrzeugs über einen Antriebsstrang auf das jeweilige Rad zu übertragen. Diese herkömmliche Art der Radaufhängung erfordert einen vergleichsweise großen Bauraum, der dann nicht mehr für andere Komponenten des Fahrzeugs nutzbar ist. Außerdem ist das Zusammenspiel des Antriebsstrangs beziehungsweise dessen Wellen und den Radaufhängungen kompliziert, empfindlich und schwierig zu kontrollieren.

Der vorliegenden Erfindung liegt daher die Aufgabe zugrunde, eine Radaufhängung der eingangs genannten Art zu vereinfachen und auf platzsparende Weise auszugestalten und robuster weiterzubilden.

Erfindungsgemäß wird die voranstehende Aufgabe durch die Merkmale des Anspruches 1 gelöst. Danach ist eine Radaufhängung für ein über einen elektrischen oder pneumatischen Motor angetriebenes Rad eines Fahrzeugs angegeben. Das angetriebene Rad ist insbesondere das Hinterrad eines Nutzfahrzeugs. Dabei kann es sich beispielsweise um Niederflurfahrzeuge wie Stadtbusse und Flughafenbusse, um Doppeldecker, oder um andere Nutzfahrzeuge handeln.

Die Radaufhängung umfasst einen elektrischen oder pneumatischen Motor, und eine Schwinge, die in einem ersten Bereich um eine Schwenkachse schwenkbar an dem Fahrzeug gelagert ist, und in einem zweiten Bereich an dem Fahrzeug abgestützt ist, wobei ein dritter Bereich der Schwinge einen gegenüber der Schwinge drehfesten Teil des Motors trägt, um mit einem drehenden Teil des Motors auf das Rad ein Drehmoment zu übertragen.

In erfindungsgemäßer Weise ist erkannt worden, dass die zugrundeliegende Aufgabe auf überraschend einfache Weise gelöst werden kann, indem der stehende Teil des Motors auf der Schwinge sitzt. Der Motor treibt somit lediglich ein Rad des Fahrzeugs an. Anstelle einer komplizierten Lagerung einer Antriebswelle in der Schwinge ist der Motor direkt mit der Schwinge verbunden. Diese Lösung ist platzsparend, denn ein Antriebsstrang entfällt komplett, so dass im Bodenbereich des Fahrzeugs sehr viel mehr Bauraum für andere Zwecke oder Bauteile zur Verfügung steht, beispielsweise um Batterien im Fahrzeugunterbau unterzubringen. Somit ist einerseits die Energieversorgung des Motors über kurze Zuleitungswege gesichert, andererseits wird der Schwerpunkt des gesamten Fahrzeugs nach unten verlagert. Durch einen tiefen Scherpunkt lassen sich auch elektrisch oder pneumatisch betriebene Nutzfahrzeuge in Leichtbauweise herstellen und noch energiesparender ausbilden.

Der Motor kann auf der zur Fahrzeugmitte gerichteten Seite der Schwinge sitzen und das Rad mittels einer Welle antreiben, die durch die Schwinge hindurch läuft. Hierbei kann es sich insbesondere um einen Innenläufer handeln, der bevorzugt permanent erregt ist. Der außen befindliche Teil sitzt dann als stehender Teil des Motors auf der Schwinge.

Vorzugsweise ist der Motor als Radnabenantrieb ausgebildet. Dabei kann es sich um einen getriebelosen permanenterregten Synchronmotor (PMSM) mit Außenläufer handeln, denkbar ist allerdings auch die Verwendung von anderen Antriebskonzepten mit Vorgelegegetrieben oder Planetengetrieben.

Diese Ausgestaltung des Motors als Radnabenantrieb ist besonders platzsparend, da sowohl der stehende und der drehende Teil des Motors als auch das Rad außenseitig, bzw. radseitig auf der Schwinge sitzen, sodass die gesamte Radaufhängung noch platzsparender ausgeführt ist. Bei der Verwendung der Radaufhängung in Stadtbussen oder Flughafenbussen wird somit nicht nur eine noch niedrigere und noch fahrgastfreundlichere Niederflurbauweise ermöglicht. Vielmehr lässt sich durch Wegfall der Vorgelegegetriebe zudem eine größere Durchgangsbreite zwischen zwei Radaufhängungen einer Achse, beispielsweise der Hinterachse, realisieren. Das Fahrzeug wäre somit auf seiner gesamten Länge für beispielsweise Kinderwägen oder Rollstühle nutzbar.

Ferner lassen sich auch bereits im Betrieb befindliche Fahrzeuge, die mit herkömmlichen Antriebssträngen und einer 1-Lenker- Aufhängung versehen sind, mit einer erfindungsgemäßen Radaufhängung einfach und kostengünstig auf einen Elektroantrieb beziehungsweise auf einen pneumatischen Antrieb umrüsten. Die dafür benötigten Batterien lassen sich dann beispielsweise im anstelle des Antriebsstrangs im Fahrzeugunterbau, oder dort, wo sich zuvor der Verbrennungsmotor befunden hat, unterbringen und je nach Art des Nutzfahrzeugs anforderungsgerecht dimensionieren, um eine erforderliche Reichweite des Nutzfahrzeugs gewährleisten zu können.

Durch das Wegfallen der Elemente des Antriebsstrangs lassen sich trotz elektrischem oder pneumatischen Motor die radgefederten Massen reduzieren. Die Räder federn durch die jeweilige Radaufhängung vollkommen unabhängig voneinander ein, und lassen sich durch den jeweiligen Motor vollkommen unabhängig voneinander ansteuern und bewegen, so dass das Schwingungsverhalten des Fahrzeugs verbessert werden kann.

In vorteilhafter Weiterbildung kann die Schwinge eine Schräglenkerschwinge für eine Schräglenkerradaufhängung sein. Durch entsprechende Dimensionierung sind Schräglenkerradaufhängungen in der Lage, die beim Fahren auftretenden Längs- und Querkräfte besonders vorteilhaft aufzunehmen und die Fahrwerkskinematik zu verbessern.

Erfindungsgemäß ist die Schwinge angeordnet mit einem Pfeilungswinkel der in einem ersten Winkelbereich zwischen 10° und 25° liegt und mit einem Dachwinkel, der in einem zweiten Bereich zwischen 0° und 5° liegt. In diesen Winkelbereichen führt die Verwendung von Schräglenkeraufhängungen zu einem besonders geringen Reifenverschleiß und einem vorteilhaften Wankverhalten.

Erfindungsgemäß ist der erste Bereich der Schwinge als Hohlkörper ausgebildet. Somit lässt sich der Schräglenker unter Einsatz der Gusstechnologie herstellen. Möglich ist jedoch auch die Herstellung mit Blechteilen und durch Schweißen oder mittels 3D-Druck der Schwinge. Die Schwinge ist aus Metall, vorzugsweise aus Stahl- oder Eisenguss gefertigt.

Vorzugsweise kann die Schwinge innerhalb des vorderen Bereich eine Gitter- oder Rippenstruktur aufweisen, was die Stabilität der Schwinge steigert. Der dritte Bereich ist in Vollmaterial ausgebildet.

Der zweite Bereich kann je nach Anwendungsfall in Vollmaterial oder als Hohlkörper, gegebenenfalls mit einer Gitter- oder Rippenstruktur, ausgebildet sein.

Somit lässt sich beispielsweise eine Gewichtsreduktion erreichen. In einer Ausführungsform kann der zweite Bereich gleich dem dritten Bereich sein.

Nach einer vorteilhaften Ausführungsform kann entlang der Schwinge mindestens eine Leitung verlaufen. Hierbei kann es sich um Versorgungs- und/oder Steuerleitungen handeln, insbesondere für den Motor. Die Leitungen können beispielsweise Hydraulikleitungen sein, oder der Energieversorgung, insbesondere auf elektrische oder pneumatisch Weise, der Kühlung, der Kommunikation oder anderen Zwecken dienen. Mehrere Leitungen können zusammen oder getrennt entlang der Schwinge verlaufen oder auch in Gestalt eines Kabelbaums zu einer großen Leitung verbunden sein.

In vorteilhafter Weiterbildung verläuft die Leitung in einer Aussparung in der Schwinge oder ist an der Schwinge befestigt. Weiter vorzugsweise weist die Schwinge in ihrem dritten Bereich einen Durchgang für die Leitung auf, durch den eine Anbindung an den Motor herstellbar ist.

Gemäß einer besonders vorteilhaften Ausführungsform kann die Leitung in Gestalt eines oder mehrerer in die Schwinge integriertem Kanals ausgebildet sein. Diese Ausgestaltung kann in der Gussform vorgesehen sein. Durch eine geschickte Ausgestaltung, beispielsweise in Kombination mit einer Gitter-oder Rippenstruktur in als Hohlkörper ausgeführten Bereichen der Schwinge können die integrierten Kanäle in Gestalt eines Wärmetauschers zur Kühlung des Motors ausgebildet sein, wobei innerhalb und/oder außerhalb der Schwinge Elemente des Wärmetauschers vorgesehen sein können.

Nach einer vorteilhaften Ausführungsform kann die Schwinge an ihrem dritten Bereich eine nach außen gerichtete kegelförmige Fläche umfassen, um den Motor anzubringen. Hierbei kann es sich insbesondere um eine konische Außenfläche eines Zylinders bzw. eines Hohlzylinders handeln, auf welche der stehende Teil des Motors aufgeschoben, aufgepresst oder anderweitig daran fixiert werden kann.

Vorzugsweise kann die Lagerung der Schwinge am Fahrzeug mittels zweier Gummilager im ersten Bereich der Schwinge ausgebildet sein. Die Lagerung kann über einen Hilfsrahmen beziehungsweise einen Fahrschemel, erfolgen. Zudem kann die Lagerung der Schwinge über eine Drehstabfeder erfolgen.

Gemäß einer weiter bevorzugten Ausführungsform kann die Radaufhängung ferner eine am dritten Bereich der Schwinge angebrachte erste Bremsvorrichtung umfassen. Vorzugsweise kann am dritten Bereich der Schwinge zusätzlich eine zweite Bremsvorrichtung angebracht sein. Weiter vorzugsweise die Schwinge über einen Schwingungsaufnehmer an dem Fahrzeug abgestützt sein.

Die zugrundeliegende Aufgabe ist des Weiteren durch die Merkmale des Anspruchs 12 gelöst.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten

Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: eine perspektivische Ansicht einer erfindungsgemäßen Radaufhängung mit einem Motor,
- Fig. 2: eine perspektivische Ansicht einer erfindungsgemäßen Radaufhängung ohne Motor,
- Fig. 3: eine perspektivische Ansicht einer erfindungsgemäßen Radaufhängung mit Motor und ohne Bremssattel,
- Fig. 4: eine perspektivische Ansicht einer erfindungsgemäßen Radaufhängung ohne Motor und ohne Bremssattel,
- Fig. 5: eine perspektivische Ansicht einer erfindungsgemäßen Radaufhängung mit einer pneumatischen Federdämpfervorrichtung,
- Fig. 6: eine perspektivische Ansicht einer erfindungsgemäßen Radaufhängung mit einem Adapter für eine pneumatische Federdämpfervorrichtung,
- Fig. 7: eine perspektivische Ansicht einer erfindungsgemäßen Radaufhängung mit einer hydropneumatischen Federdämpfervorrichtung, und
- Fig. 8: eine perspektivische Ansicht einer erfindungsgemäßen Radaufhängung mit einem Adapter für eine hydropneumatische Federdämpfervorrichtung.

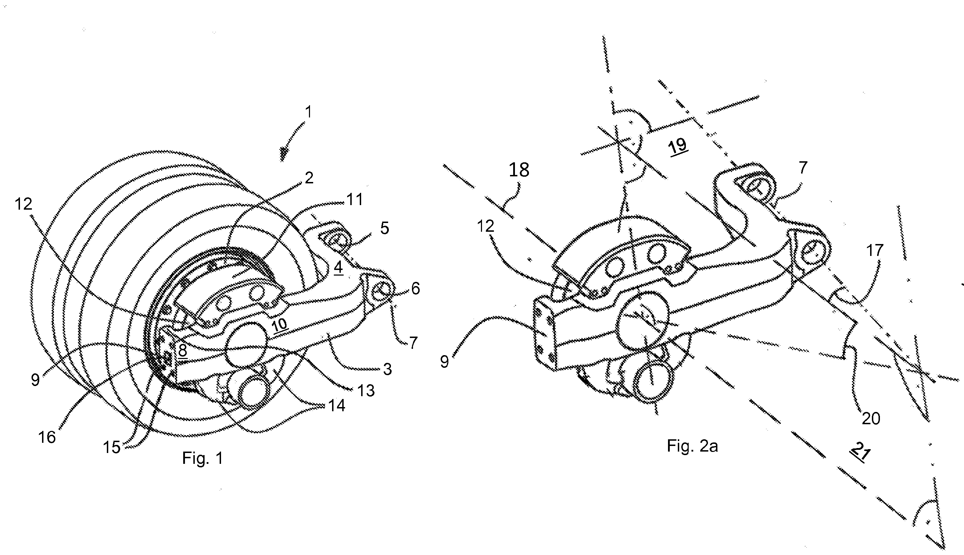

Fig. 1 zeigt eine Radaufhängung 1 für ein Rad eines Fahrzeugs, insbesondere für ein Hinterrad eines Nutzfahrzeugs (nicht dargestellt). Das Rad des Fahrzeugs ist über einen elektrischen Motor 2 in Gestalt eines Radnabenantriebs angetrieben. Ferner ist eine Schwinge 3 zu abgebildet. Die Schwinge 3 hat einen ersten

Bereich 4. Die Schwinge 3 ist in dem ersten Bereich 4 an dem Fahrzeug (in Fig. 1 nicht dargestellt) gelagert. Hierfür sind im ersten Bereich 4 zwei Durchgangsbohrungen 5, 6 vorgesehen, die eine Schwenkachse 7 der Schwinge 3 definieren. Ein zweiter Bereich 8 der Schwinge 3 dient zur Abstützung der Schwinge 3 am Fahrzeug. Für diesen Zweck ist am zweiten Bereich 8 eine Schnittstelle 9 in Gestalt einer äußeren Stirnfläche am zweiten Bereich 8 ausgebildet. Ferner ist ein dritter Bereich 10 zu sehen, der einen drehfesten Teil des Motors 2 trägt. Die Schwinge 3 ist ein aus Metall gefertigtes Gussteil, wobei der erste Bereich 4 der Schwinge 3 als Hohlkörper ausgebildet ist. Der zweite Bereich 8 und der dritte Bereich 10 der Schwinge 3 sind in Vollmaterial ausgebildet. Beim Ausführungsbeispiel nach Fig. 1 ist der dritte Bereich 10 zentral zwischen dem ersten Bereich 4 und dem zweiten Bereich 8 angeordnet. Aufgrund der Hebelwirkung der Schwinge 3 führt diese Ausgestaltung zu einer geringeren Belastung der Radaufhängung 1 und ist somit kinematisch vorteilhaft. Allerdings könnte ebenso der zweite Bereich 8 zwischen dem ersten Bereich 4 und dem dritten Bereich 10 angeordnet sein.

Der drehfeste Teil des Motors 2 wird von dem dritten Bereich 10 der Schwinge 3 insbesondere drehfest getragen. Hierzu umfasst der dritte Bereich 10 eine nach außen gerichtete kegelförmige Fläche (in Fig. 1 nicht zu sehen), auf die der drehfeste Teil des Motors 2 aufgepresst ist. Somit kann der drehfeste Teil des Motors 1 mit einem drehenden Teil des Motors 2 zusammenwirken, um auf das Rad ein Drehmoment zu übertragen, wobei das Rad seinerseits drehfest mit dem drehenden Teil des Motors 2 verbunden ist.

Am dritten Bereich 10 der Schwinge 3 ist ferner eine erste Bremsvorrichtung 11 angebracht. Die erste Bremsvorrichtung 11 ist in Gestalt eines Bremssattels für eine Scheibenbremse ausgestaltet und über Schraubverbindungen (in Fig. 1 nicht zu sehen) an der Schwinge 3 fixiert. Der Bremssattel wirkt mit einer Bremsscheibe 12 zusammen, die drehfest mit dem drehenden Teil des Motors 2 verbunden ist. Außerdem sind an der Schwinge 3 Materialanhäufungen 13 zu erkennen, die die Bremsscheibe 12 zumindest in teilweise umschließen und somit vor mechanischen Störeinflüssen schützen.

Zudem ist am dritten Bereich 10 auch ein Bremsadapter 14 für eine zweite Bremsvorrichtung (in Fig. 1 nicht dargestellt) angebracht, insbesondere für eine Parkbremseinrichtung in Gestalt einer Feststellbremse. Es lassen sich verschiedenartige Bremsadapter 14 für verschiedenartige Bremsvorrichtungen an der Schwinge 3 anbringen.

Die Schnittstelle 9 dient zur Abstützung der Schwinge 3 am Fahrzeug beziehungsweise zur Anbindung von unterschiedlichen Arten von Schwingungsaufnehmern (in Fig. 1 nicht dargestellt). Die Schnittstelle 9 ist als eine von dem ersten Bereich 10 weg zeigende Stirnfläche der Schwinge 3 ausgebildet und umfasst Bohrungen 15 für Befestigungselemente (in Fig. 1 nicht dargestellt), um Schwingungsaufnehmer oder Adapter (in Fig. 1 nicht dargestellt) an der Schnittstelle 9 anzubringen. Auf der Stirnfläche ist beispielhaft eine Aussparung 16 dargestellt, um beispielsweise den Adapter auszurichten und Kräfte zwischen dem Adapter und der Schnittstelle übertragen. In Fig. 1 ist die Aussparung 16 in Gestalt einer rechteckigen Vertiefung ausgebildet, wobei je nach Anwendungsfall andere zweckmäßige Ausgestaltungen von Vertiefungen oder Materialhäufungen einerseits auf der Schnittstelle 9 mit entsprechend dazu passenden Materialhäufungen oder Vertiefungen auf dem Adapter möglich sind.

Nunmehr bezugnehmend auf Fig. 2a ist die Schwinge 3 als Schräglenkerschwinge für eine Schräglenkerradaufhängung ausgebildet. Hierbei ist die Schwinge 3 mit einem Pfeilungswinkel 17 angeordnet, der in einem ersten Winkelbereich zwischen 10° und 25° liegt. Der Pfeilungswinkel 17 ist der Winkel zwischen der Schwenkachse 7 und einer Fahrzeugquerachse 18 in einer horizontalen Ebene 19. Ferner ist die Schwinge 3 mit einem Dachwinkel 20 angeordnet, der in einem zweiten Winkelbereich zwischen 0° und 5° liegt. Der Dachwinkel 12 ist der Winkel zwischen der Schwenkachse 7 und der Fahrzeugquerachse 18 in einer vertikalen Ebene 21.

Die schräge Aufhängung - also die Lagerung der Schwinge 3 am Fahrzeug - erfolgt dabei an den Durchgangsbohrungen 5, 6 mittels zweier Gummilager (nicht dargestellt) im ersten Bereich 4 der Schwinge 3. Die Gummilager sind entweder direkt mit einer Aufnahme am Rahmen des Fahrzeugs befestigt oder zur Optimierung des Fahrkomforts an einem Hilfsrahmen gelagert. Ferner kann entlang der Schwenkachse 7 eine Drehstabfeder zur weiteren Federung zwischen mindestens einem der Gummilager und dem Rahmen oder Hilfsrahmen angebracht sein (nicht dargestellt).

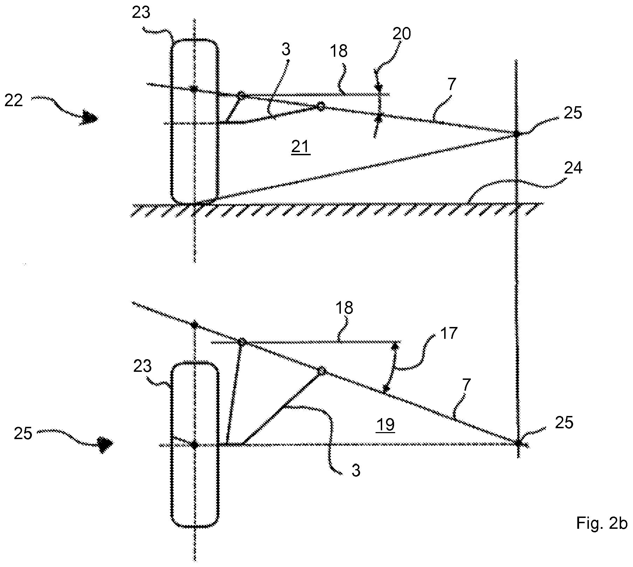

Noch deutlicher wird die Funktionsweise einer Schräglenkerradaufhängung sowie das Verhältnis zwischen Pfeilungswinkel 17 und Dachwinkel 18 bei Betrachtung von Fig. 2b. Der obere Teil 22 der Fig. 2b zeigt eine Ansicht in der vertikalen Ebene 21. Das Rad 23 steht auf der Fahrbahn 24. Die Schwinge 3 der Schräglenkerradaufhängung definiert eine Schwenkachse 7, auf der ein Momentanpol 25 des Rads 23 liegt. Die Schwinge 3 ist in der vertikalen Ebene 21 um den Dachwinkel 20 gekippt.

Der untere Teil 25 der Fig. 2b zeigt eine Ansicht in der horizontalen Ebene 19, also von oben. Auch im unteren Teil der Fig. 2b ist die Schwenkachse 7 gekippt, nämlich in der horizontalen Ebene 19 um den Pfeilungswinkel 17 in Bezug auf diee Fahrzeugquerachse 18. Durch Vergrößern des Pfeilungswinkels 17 sinkt die Sturzänderung beim Einfedern. Ferner erhöht sich das Wankzentrum, wobei das Wankzentrum durch eine Änderung des Dachwinkels 20 wieder abgesenkt werden kann. Durch Verkleinern des Pfeilungswinkels 17 oder durch Vergrößern des Dachwinkels 20 hingegen lässt sich eine günstigere Bremsnickabstützung erreichen.

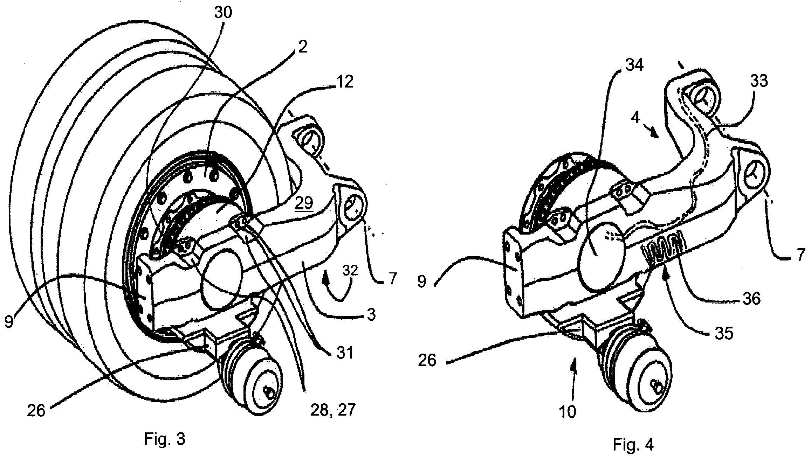

Fig. 3 zeigt die Radaufhängung 1 mit einer pneumatischen Bremsvorrichtung als zweite Bremsvorrichtung 26. Da die als Bremssattel ausgebildete erste Bremsvorrichtung 11 in Fig. 3 fehlt, ist die mit dem drehenden Teil des Motors 2 drehfest verbundene Bremsscheibe 12 in Fig. 3 besser zu erkennen. Die Schnittstelle 27 für die erste Bremsvorrichtung 11 ist in Gestalt von zwei Aussparungen 28 auf einer Oberseite 29 der Schwinge 3 ausgebildet. An den Aussparungen 28 befinden sich zwei radseitig angeordnete Seitenwände 30 mit jeweils zwei Durchgangsbohrungen 31 für Befestigungsmittel, mit denen die erste Bremsvorrichtung - beispielsweise ein Bremssattel - an der Oberseite 29 der Schwinge 3 befestigt werden kann (in Fig. 3 nicht dargestellt). Auf einer Unterseite 32 der Schwinge 3 ist anstelle eines Bremsadapters (in Fig. 3 nicht dargestellt) eine zweite Bremsvorrichtung 26 angebunden, die als pneumatische Bremsvorrichtung ausgebildet ist. Denkbar ist jedoch auch der umgekehrte Fall, bei dem eine erste Bremsvorrichtung in Gestalt eines Bremssattels auf der Unterseite 32 der Schwinge 3 angekoppelt ist und eine zweite Bremsvorrichtung auf der Oberseite 29 der Schwinge 3 angekoppelt ist, oder andere Ausgestaltungen mit zwei Bremsvorrichtungen auf der Oberseite 29 und der Unterseite 32 der Schwinge 3 (in Fig. 3 nicht dargestellt).

In Fig. 4 ist eine Leitung 33 angedeutet, die entlang der Schwinge 3 verläuft. Die Leitung 33 kann an der Schwinge 3 befestigt oder in einer Aussparung der Schwinge 3 angeordnet sein. Im vorliegenden Ausführungsbeispiel verläuft ist die Leitung 33 durch den ersten Bereich 4 und den dritten Bereich 10 der Schwinge 3 bis hin zu einem Durchgang 34. Der Durchgang 34 verläuft durch die Schwinge 8 und ermöglicht eine Führung der Leitung 33 bis hinein in ein Inneres der Radnabe.

Ferner sind in Fig. 4 in der Schwinge 3 Leitungen die Schwinge 3 integrierte Kanäle 35 zu sehen, die in Gestalt eines Wärmetauschers angeordnet sind. Hierbei können innerhalb und/oder außerhalb der Schwinge Rippen 36 des Wärmetausches vorgesehen sein, wobei die Rippen in Fig. 4 insbesondere innerhalb der Schwinge 3 verlaufen. Die Rippen 36 lassen sich insbesondere in den ersten Bereich 4 der Schwinge 3 integrieren, der als mit Rippen 36 durchzogener Hohlkörper ausgestaltet werden kann.

Mit einem solchen Wärmetauscher lässt sich die Kühlung des Motors (in Fig. 4 nicht dargestellt) optimieren. Aufgrund der Ausbildung der Rippen 36 und Leitungen des Wärmetauschers als in die Schwinge 3 integrierte Kanäle 35 kann die Teilevielfalt gesenkt werden. Weiterhin kann die Wärmeübertragung innerhalb des Wärmetauschers nah am Rad stattfinden, ohne dass Kühlmittel über lange Strecken hinweg gefördert werden muss und der für den Betrieb des Wärmetauschers erforderliche Temperaturunterschied dadurch absinkt.

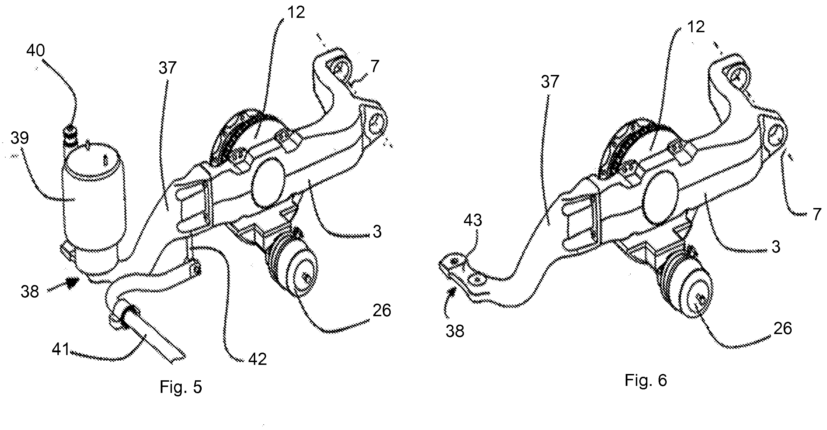

In Fig. 5 ist eine Radaufhängung 1 zu sehen, bei der ein Schwingungsaufnehmer über einen Adapter 37 an der Schnittstelle 9 angebunden ist. Der Schwingungsaufnehmer ist als eine pneumatische Feder-Dämpfer-Vorrichtung ausgebildet. Der Adapter 37 ist als eine Verlängerung der Schwinge 3 ausgebildet und läuft in Richtung weg von der Schwinge zu einem Ende 38 hin zu. An dem Ende 38 des Adapters 37 ist ein Luftfederelement 39 und ein Dämpferelement 40 befestigt. Ein zusätzlicher mit dem Fahrzeug verbundener Stabilisator 41 dämpft Schwingungen der Schwinge 3 und wird mittels eines Stabilenkers 42 mit dem Adapter 37 verbunden.

Fig. 6 zeigt die Baugruppe aus Fig. 5 ohne Luftfederelement und Dämpferelement. Es ist zu sehen, dass das Ende 38 eine im Wesentlichen horizontale Fläche 43 aufweist, an der das Federelement und das Dämpferelement der pneumatischen Feder-Dämpfer-Vorrichtung 39, 40 ankoppelbar sind.

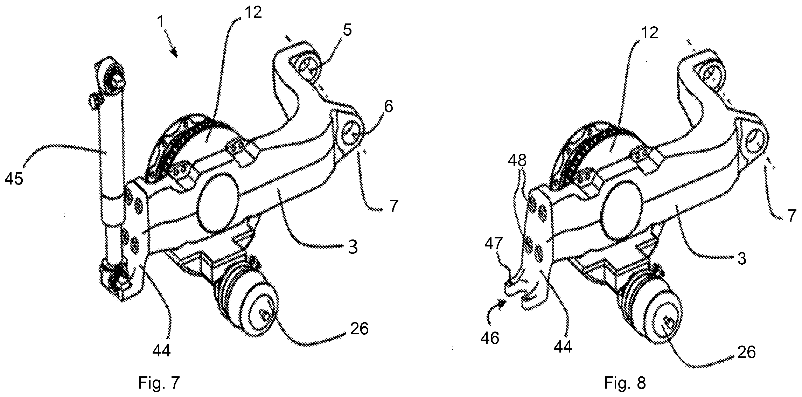

Die in Fig. 7 dargestellte Radaufhängung 1 weist einen Schwingungsaufnehmer auf, der über einen anderen Adapter 44 an der Schnittstelle 9 angebunden ist. Die Schwinge 3 sowie die Schnittstelle 9 für die Anbindung der Adapter 37, 44 muss hierfür nicht verändert werden. Auf diese Weise sind sowohl die Schnittstelle 9 als auch die Adapter 37, 44 ausgebildet, um ein Baukastensystem zu verwirklichen. Der Schwingungsaufnehmer ist eine hydropneumatische Feder-Dämpfer-Vorrichtung 45. Mit der hydropneumatischen Feder-Dämpfer-Vorrichtung 45 lassen sich Wankbewegungen in Kurven auch ohne einen zusätzlichen Stabilisator weitestgehend eliminieren. Steifigkeit und Schwingungsaufnahmeverhalten der hydropneumatischen Feder-Dämpfer-Vorrichtung 45 sind über einen großen Bereich einstell- und regelbar und lassen sich damit nahezu unabhängig von der Beladung des Fahrzeugs konstant halten. Zur Anbindung der hydropneumatischen Feder-Dämpfer-Vorrichtung 45 ist der Adapter 44 in Gestalt eines Plättchens zur Lagerung der hydropneumatische Feder-Dämpfer-Vorrichtung ausgebildet.

In Fig. 8 - ohne hydropneumatische Feder-Dämpfer-Vorrichtung - ist zu sehen, dass der als Plättchen ausgebildete Adapter 44 an seinem unteren Ende eine in Gestalt zweier Erhöhungen ausgebildete Lagergabel 46 aufweist, die jeweils mit Lagerpunkten für eine gelenkige Lagerung der der hydropneumatische Feder-Dämpfer-Vorrichtung ausgebildet sind. Der als Plättchen ausgebildete Adapter 44 kann - ebenso wie der zuvor unter Bezugnahme auf die Fign. 5 und 6 beschriebene Adapter 37 - über Schraubverbindungen 48 an der Schnittstelle 9 befestigt werden, und ist im vorliegenden Ausführungsbeispiel über vier in einem Viereck angeordnete Schraubenverbindungen 48 an der Schnittstelle 9 befestigt.

Die in Verbindung mit den Fign. 5 bis 8 beschriebenen beispielhaften Ausgestaltungen 37, 44 der Adapter zeigen auf, wie sich die Schnittstelle 9 der Schwinge 3 zur Anbindung unterschiedlicher Arten von Schwingungsaufnehmern 39, 40, 45 eignet. Die Schnittstelle 9 der Schwinge 3 ist angepasst, um daran einen von einer Mehrzahl von sich unterscheidenden Adaptern 37, 44 zu befestigen, die beispielsweise für die Verwendung mit einer pneumatischen Feder-Dämpfer-Vorrichtung 39, 40, mit einer hydropneumatischen Feder-Dämpfer-Vorrichtung 45, oder mit elektrischen, elektromechanischen oder elektrohydraulischen Feder-Dämpfer-Vorrichtungen angepasst sein können. Auf diese Weise ist ein Baukastensystem verwirklicht.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Radaufhängung
- 2: Motor
- 3: Schwinge
- 4: Erster Bereich
- 5: Durchgangsbohrung
- 6: Durchgangsbohrung
- 7: Schwenkachse
- 8: Zweiter Bereich
- 9: Schnittstelle (Schwingungsaufnehmer)
- 10: Dritter Bereich
- 11: Erste Bremsvorrichtung
- 12: Bremsscheibe
- 13: Materialanhäufungen
- 14: Bremsadapter
- 15: Bohrungen
- 16: Aussparung (Adapter)
- 17: Pfeilungswinkel
- 18: Fahrzeugquerachse
- 19: Horizontale Ebene
- 20: Dachwinkel
- 21: Vertikale Ebene
- 22: Oberer Teil von Fig. 2b
- 23: Rad
- 24: Fahrbahn
- 25: Unterer Teil von Fig. 2b
- 26: Zweite Bremsvorrichtung
- 27: Schnittstelle (erste Bremsvorrichtung)
- 28: Aussparung (erste Bremsvorrichtung)
- 29: Oberseite
- 30: Seitenwand
- 31: Durchgangsbohrung
- 32: Unterseite
- 33: Leitung
- 34: Durchgang
- 35: Integrierte Kanäle
- 36: Rippen
- 37: Adapter (pneumatischer Schwingungsaufnehmer)
- 38: Ende
- 39: Luftfederelement
- 40: Dämpferelement
- 41: Stabilisator
- 42: Stabilenker
- 43: Horizontale Fläche
- 44: Adapter (hydropneumatischer Schwingungsaufnehmer)
- 45: Hydropneumatische Feder-Dämpfer-Vorrichtung
- 46: Lagergabel
- 47: Lagerpunkt
- 48: Schraubverbindungen

## Patentansprüche

1. Radaufhängung (1) für ein über einen elektrischen oder pneumatischen Motor (2) angetriebenes Rad (23) eines Fahrzeugs, insbesondere Hinterrad eines
Nutzfahrzeugs, mit
einem elektrischen oder pneumatischen Motor (2), und
einer Schwinge (3), die in einem ersten Bereich (4) um eine Schwenkachse (7) schwenkbar an dem Fahrzeug gelagert ist, und in einem zweiten Bereich (8) an dem Fahrzeug abgestützt ist,
wobei ein dritter Bereich (10) der Schwinge (3) einen gegenüber der Schwinge (3) drehfesten Teil des Motors (2) trägt, um mit einem drehenden Teil des Motors (2) auf das Rad ein Drehmoment zu übertragen,
wobei die Schwinge (3) mit einem Pfeilungswinkel (17) angeordnet ist, der in einem ersten Winkelbereich zwischen 10° und 25° liegt, und mit einem Dachwinkel (20) angeordnet ist, der in einem zweiten Winkelbereich zwischen 0° und 5° liegt,
**dadurch gekennzeichnet, dass**
der erste Bereich (4) der Schwinge (3) als Hohlkörper ausgebildet ist und der dritte Bereich (10) der Schwinge (3) in Vollmaterial ausgebildet ist, und die Schwinge (3) aus Metall, vorzugsweise als Gussteil gefertigt ist.

2. Radaufhängung (1) nach Anspruch 1, **dadurch gekennzeichnet, dass** der Motor (2) als Radnabenantrieb ausgebildet ist.

3. Radaufhängung (1) nach Anspruch 1 oder 2, **dadurch gekennzeichnet, dass** die Schwinge (3) eine Schräglenkerschwinge für eine Schräglenkerradaufhängung des Rads (23) ist.

4. Radaufhängung (1) nach einem der Ansprüche 1 bis 3, **dadurch gekennzeichnet, dass** entlang der Schwinge (3) oder in der Schwinge (3) eine Leitung (33, 35) verläuft.

5. Radaufhängung (1) nach Anspruch 4, **dadurch gekennzeichnet, dass** die Leitung (33) in einer Aussparung in der Schwinge (3) verläuft oder an der Schwinge (3) befestigt ist.

6. Radaufhängung (1) nach Anspruch 4 oder 5, **dadurch gekennzeichnet, dass** die Schwinge (3) in ihrem dritten Bereich (10) einen Durchgang (34) für die Leitung (33) aufweist.

7. Radaufhängung (1) nach Anspruch 4, **dadurch gekennzeichnet, dass** die Leitung in Gestalt eines in die Schwinge (3) integrierten Kanals (35) ausgebildet ist.

8. Radaufhängung (1) nach Anspruch 7, **dadurch gekennzeichnet, dass** die in die Schwinge integrierten Kanäle (35) in Gestalt eines Wärmetauschers angeordnet sind, wobei innerhalb und/oder außerhalb der Schwinge (3) Rippen (36) des Wärmetauschs vorgesehen sein können.

9. Radaufhängung (1) nach einem der Ansprüche 1 bis 8, **dadurch gekennzeichnet, dass** die Schwinge (3) an ihrem dritten Bereich (10) eine nach außen gerichtete kegelförmige Fläche umfasst, um den Motor (2) anzubringen.

10. Radaufhängung (1) nach einem der Ansprüche 1 bis 9, **dadurch gekennzeichnet, dass** die Lagerung der Schwinge am Fahrzeug mittels zweier Gummilager im ersten Bereich (4) der Schwinge (3) ausgebildet ist, die direkt oder über einen Hilfsrahmen an der Karosserie gelagert sind, vorzugsweise über eine Drehstabfeder.

11. Radaufhängung (1) nach einem der Ansprüche 1 bis 10, weiter umfassend:
eine an dem dritten Bereich (10) der Schwinge (3) angebrachte erste Bremsvorrichtung (11) und vorzugsweise eine am dritten Bereich der Schwinge angebrachte zweite Bremsvorrichtung (26); und/oder die Schwinge in dem zweiten Bereich über einen Schwingungsaufnehmer (39, 40, 45), insbesondere eine Feder-Dämpfer-Vorrichtung, an dem Fahrzeug abgestützt ist und die Schwinge (3) vorzugsweise eine Schnittstelle (9) zur Anbindung von unterschiedlichen Arten von Schwingungsaufnehmern (39, 40, 45) aufweist.

12. Schwinge (3) für eine Radaufhängung nach einem der Ansprüche 1 bis 11, wobei die Schwinge (3) in einem ersten Bereich (4) um eine Schwenkachse (7) schwenkbar an dem Fahrzeug lagerbar ist, und in einem zweiten Bereich (8) an dem Fahrzeug abstützbar ist,
wobei ein dritter Bereich (10) der Schwinge (3) einen gegenüber der Schwinge (3) drehfesten Teil des Motors (2) tragen kann, um mit einem drehenden Teil des Motors (2) auf das Rad ein Drehmoment zu übertragen,
wobei die Schwinge (3) mit einem Pfeilungswinkel (17) anordbar ist, der in einem ersten Winkelbereich zwischen 10° und 25° liegt, und mit einem Dachwinkel (20) anordbar ist, der in einem zweiten Winkelbereich zwischen 0° und 5° liegt,
wobei der erste Bereich (4) der Schwinge (3) als Hohlkörper ausgebildet ist und der dritte Bereich (10) der Schwinge (3) in Vollmaterial ausgebildet ist, und die Schwinge (3) aus Metall, vorzugsweise als Gussteil gefertigt ist.

## Claims

1. Wheel suspension (1) for a wheel (23), which is driven by means of an electric or pneumatic motor (2), of a vehicle, in particular a rear wheel of a utility vehicle, having an electric or pneumatic motor (2), and
a swing arm (3) which is supported on the vehicle in a first region (4) so as to be able to be pivoted about a pivot axis (7) and which is supported on the vehicle in a second region (8),
wherein a third region (10) of the swing arm (3) carries a portion of the motor (2) which is rotationally secure with respect to the swing arm (3) in order to transmit a torque to the wheel with a rotating portion of the motor (2),
wherein the swing arm (3) is arranged with a tapering angle (17) which is in a first angular range between 10° and 25° and with a roof angle (20) which is in a second angular range between 0° and 5°, **characterised in that**
the first region (4) of the swing arm (3) is in the form of a hollow member and the third region (10) of the swing arm (3) is made from solid material and the swing arm (3) is produced from metal, preferably as a cast component.

2. Wheel suspension (1) according to claim 1, **characterised in that** the motor (2) is in the form of a wheel hub drive.

3. Wheel suspension (1) according to claim 1 or 2, **characterised in that** the swing arm (3) is a tilted link swing arm for a tilted link wheel suspension of the wheel (23) .

4. Wheel suspension (1) according to any one of claims 1 to 3, **characterised in that** a line (33, 35) extends along the swing arm (3) or in the swing arm (3).

5. Wheel suspension (1) according to claim 4, **characterised in that** the line (33) extends in a recess in the swing arm (3) or is secured to the swing arm (3).

6. Wheel suspension (1) according to claim 4 or 5, **characterised in that** the swing arm (3) has in the third region (10) thereof a passage (34) for the line (33).

7. Wheel suspension (1) according to claim 4, **characterised in that** the line is in the form of a channel (35) which is integrated in the swing arm (3).

8. Wheel suspension (1) according to claim 7, **characterised in that** the channels (35) which are integrated in the swing arm are arranged in the form of a heat exchanger, wherein ribs (36) of the heat exchanger may be provided inside and/or outside the swing arm (3).

9. Wheel suspension (1) according to any one of claims 1 to 8, **characterised in that** the swing arm (3) comprises in the third region (10) thereof an outwardly directed conical face in order to fit the motor (2).

10. Wheel suspension (1) according to any one of claims 1 to 9, **characterised in that** the bearing of the swing arm on the vehicle is formed by means of two rubber bearings in the first region (4) of the swing arm (3) which are supported directly or by means of an auxiliary frame on the body, preferably by means of a torsion bar.

11. Wheel suspension (1) according to any one of claims 1 to 10, further comprising: a first brake apparatus (11) which is fitted to the third region (10) of the swing arm (3) and preferably a second brake apparatus (26) which is fitted to the third region of the swing arm; and/or the swing arm is supported on the vehicle in the second region by means of a vibration absorber (39, 40, 45), in particular a spring/damper apparatus, and the swing arm (3) preferably has an interface (9) for connection of different types of vibration absorbers (39, 40, 45).

12. Swing arm (3) for a wheel suspension according to any one of claims 1 to 11, wherein the swing arm (3) can be supported on the vehicle in a first region (4) so as to be able to be pivoted about a pivot axis (7), and can be supported on the vehicle in a second region (8), wherein a third region (10) of the swing arm (3) can carry a portion, which is rotationally secure with respect to the swing arm (3), of the motor (2) in order to transmit a torque to the wheel with a rotating portion of the motor (2),
wherein the swing arm (3) can be arranged with a tapering angle (17) which is in a first angular range between 10° and 25° and can be arranged with a roof angle (20) which is in a second angular range between 0° and 5°,
wherein the first region (4) of the swing arm (3) is in the form of a hollow member and the third region (10) of the swing arm (2) is made from solid material and the swing arm (3) is produced from metal, preferably as a cast component.

## Revendications

1. Suspension de roue (1) pour une roue (23) d'un véhicule, entraînée par l'intermédiaire d'un moteur électrique ou pneumatique (2), plus particulièrement une roue arrière d'un véhicule utilitaire, avec un moteur électrique ou pneumatique (2) et un bras oscillant (3) qui est logé dans une première partie (4) de manière pivotante autour d'un axe de pivotement (7) et est appuyé, dans une deuxième partie (8), contre le véhicule,
dans lequel une troisième partie (10) du bras oscillant (3) supporte une partie du moteur (2) fixe par rapport au bras oscillant (3), afin de transmettre un couple à la roue avec une partie rotative du moteur (2),
dans lequel le bras oscillant (3) est disposé avec un angle de flèche (17) qui se trouve dans une première plage angulaire entre 10° et 25°, et avec un angle de toit (20) qui se trouve dans une deuxième plage angulaire entre 0° et 5°,
**caractérisée en ce que**
la première partie (4) du bras oscillant (3) est conçue comme un corps creux et la troisième partie (10) du bras oscillant (3) est constitué d'un matériau massif et le bras oscillant (3) est constitué de métal, de préférence comme une pièce coulée.

2. Suspension de roue (1) selon la revendication 1, **caractérisée en ce que** le moteur (2) est conçu comme un entraînement de moyeu de roue.

3. Suspension de roue (1) selon la revendication 1 ou 2, **caractérisée en ce que** le bras oscillant (3) est un bras oscillant de bras oblique pour une suspension de roue à bras oblique de la roue (23).

4. Suspension de roue (1) selon l'une des revendications 1 à 3, **caractérisée en ce que**, le long du bras oscillant (3) ou dans le bras oscillant (3), s'étend une conduite (33, 35).

5. Suspension de roue (1) selon la revendication 4, **caractérisée en ce que** la conduite (33) s'étend dans un évidement dans le bras oscillant (3) ou est fixé au bras oscillant (3).

6. Suspension de roue (1) selon la revendication 4 ou 5, **caractérisée en ce que** le bras oscillant (3) comprend, dans sa troisième partie (10), un passage (34) pour la conduite (33).

7. Suspension de roue (1) selon la revendication 4, **caractérisée en ce que** la conduite est conçue sous la forme d'un canal (35) intégré dans le bras oscillant (3).

8. Suspension de roue (1) selon la revendication 7, **caractérisée en ce que** les canaux (35) intégrés dans le bras oscillant sont disposés sous la forme d'un échangeur thermique, dans lequel à l'intérieur et/ou à l'extérieur du bras oscillant (3), des nervures (36) de l'échangeur thermique peuvent être prévues.

9. Suspension de roue (1) selon l'une des revendications 1 à 8, **caractérisée en ce que** le bras oscillant (3) comprend, sur sa troisième partie (10), une surface conique orientée vers l'extérieur, afin de monter le moteur (2).

10. Suspension de roue (1) selon l'une des revendications 1 à 9, **caractérisée en ce que** le palier du bras oscillant est disposé sur le véhicule au moyen de deux paliers en caoutchouc dans la première partie (4) du bras oscillant (3), qui sont logés directement ou par l'intermédiaire d'un cadre auxiliaire sur la carrosserie, de préférence par l'intermédiaire d'une barre de torsion.

11. Suspension de roue (1) selon l'une des revendications 1 à 10, comprenant en outre :
un premier dispositif de freinage (11) monté sur la troisième partie (10) du bras oscillant (3) et, de préférence, un deuxième dispositif de freinage (26) monté sur la troisième partie du bras oscillant ; et/ou le bras oscillant est appuyé, dans la deuxième partie, par l'intermédiaire d'un amortisseur de vibrations (39, 40, 45), plus particulièrement un dispositif amortisseur à ressort, contre le véhicule et le bras oscillant (3) comprend de préférence une interface (9) pour le montage de différentes sortes d'amortisseurs de vibrations (39, 40, 45).

12. Bras oscillant (3) pour une suspension de roue selon l'une des revendications 1 à 11, dans lequel le bras oscillant (3) peut être logé, dans une première partie (4), de manière pivotante autour d'un axe de pivotement (7), sur le véhicule, et peut être appuyé, dans une deuxième partie (8), contre le véhicule,
dans lequel une troisième partie (10) du bras oscillant (3) peut supporter une partie fixe du moteur (2) par rapport au bras oscillant (3), afin de transmettre un couple à la roue avec une partie rotative du moteur (2),
dans lequel le bras oscillant (3) peut être disposé avec un angle de flèche (17) qui se trouve dans une première plage angulaire entre 10° et 25° et avec un angle de toit (20) qui se trouve dans une deuxième plage angulaire entre 0° et 5°,
dans lequel la première partie (4) du bras oscillant (3) est conçue comme un corps creux et la troisième partie (10) du bras oscillant (3) est constitué d'un matériau massif, et le bras oscillant (3) est constitué de métal, de préférence sous la forme d'une pièce coulée.
